# EUROPÄISCHE PATENTANMELDUNG

(11) **EP 1 710 465 A1**
(43) Veröffentlichungstag der Anmeldung: **11.10.2006**
(21) Anmeldenummer: 06006997.8
(22) Anmeldetag: 31.03.2006
(51) Int. Cl.: F16F 15/123, F16F 1/12

(54) **Drehschwingungsdämpfer**

(30) Priorität: 08.04.2005 DE 102005016135
(71) Anmelder: LuK Lamellen und Kupplungsbau Beteiligungs KG, 77815 Bühl (DE)
(72) Erfinder: Birk, Albert, 77830 Bühl (DE)

(57) **Zusammenfassung**

Die Erfindung betrifft einen Drehschwingungsdämpfer mit wenigstens zwei entgegen dem Widerstand von zumindest einem Energiespeicher verdrehbaren Bauelementen.

## Beschreibung

Die Erfindung betrifft einen Drehschwingungsdämpfer mit wenigstens zwei entgegen dem Widerstand von zumindest einem Energiespeicher mit entlang seiner Längsachse sich erstreckenden Federwindungen verdrehbaren Bauelementen, welche Beaufschlagungsbereiche zur Komprimierung des Energiespeichers besitzen, wobei der Energiespeicher aus wenigstens zwei Schraubenfedern besteht, von denen die eine, erste, Schraubenfeder zumindest teilweise innerhalb des durch die Windungen der anderen, zweiten, Schraubenfeder gebildeten Federinnenraumes aufgenommen ist und der Durchmesser einer Windung der ersten Feder derart bemessen ist, dass sich diese Windung innerhalb der Erstreckung des Federinnenraumes mit zumindest einer Windung der zweiten Feder - im Wesentlichen senkrecht zur Längsachse des Energiespeichers betrachtet - radial überlagert. Eine derartige Ausgestaltung eines Energiespeichers gewährleistet, dass die beiden ineinander geschachtelten Federn zumindest in eine relative axiale Bewegungsmöglichkeit zueinander positioniert sind, das bedeutet also, eine definierte Lage zueinander einnehmen bzw. aufweisen.

Drehschwingungsdämpfer mit derart ausgebildeten Energiespeichern sind bereits durch die DE 199 09 044 A1 vorgeschlagen worden. So ist beispielsweise durch Figur 7 dieser Veröffentlichung ein Energiespeicher bekannt geworden, bei dem die Endwindung der inneren Feder und die Endwindung der äußeren Feder in Bezug zueinander derart ausgebildet sind, dass sich die innere Feder axial an einer kegelstumpfförmigen Innenphase der Endwindung der äußeren Feder abstützen kann. Eine derartige Abstützung gewährleistet jedoch nur in eine axiale Richtung eine definierte Positionierung der inneren Feder gegenüber der äußeren Feder.

Der vorliegenden Erfindung lag die Aufgabe zugrunde, Drehschwingungsdämpfer mit Energiespeichern der eingangs genannten Art bezüglich der Funktion und Lebensdauer zu verbessern. Insbesondere soll eine einfache und kostengünstige axiale Sicherung der beiden einen Energiespeicher bildenden Federn gewährleistet werden, wobei diese Sicherung in beide axiale Richtungen wirksam sein soll, um ein Herausrutschen der inneren Feder gegenüber der äußeren Feder zu vermeiden. Die Verbindung zwischen den beiden einen Energiespeicher bildenden Federn soll dabei in besonders einfacher Weise möglich sein und auch eine sichere Vormontage der beiden Federn gewährleisten.

Gemäß der Erfindung wird dies dadurch erzielt, dass die zweite, also äußere Schraubenfeder, zumindest an einer ihrer Endwindungen eine um die Längsachse des Energiespeichers zylindrisch bzw. zylinderartig verlaufende Fläche angeformt hat und die erste Feder im nicht montierten Zustand eine Endwindung mit einem größeren Außendurchmesser als der größte Durchmesser der zylinderartig verlaufenden Fläche besitzt. Dadurch wird gewährleistet, dass nach der Montage der beiden Schraubenfedern die Endwindung der inneren ersten Feder mit radialer Vorspannung an der zylindrischen bzw. zylinderartig ausgebildeten Fläche anliegt. Dadurch wird zumindest eine Reibverbindung zwischen der inneren Fläche der zweiten Feder und der Endwindung der ersten Feder erzeugt, die eine definierte Positionierung der Innenfeder gegenüber der äußeren Feder gewährleistet. Diese durch zumindest einen Reibeingriff gebildete Verbindung kann durch entsprechende Anpassung der radialen Verspannung zwischen den Endwindungen den Erfordernissen angepasst werden. Für manche Anwendungsfälle kann es zweckmäßig sein, wenn auch die Endwindung der inneren Feder eine entsprechende Fläche angeformt hat. Es kann auch zweckmäßig sein, wenn die zylinderartig verlaufende Fläche der Endwindung der äußeren Feder zumindest geringfügig konkav ausgebildet ist bzw. eine radiale Vertiefung oder Hinterschnitt bildet. Bei einer derartigen Ausgestaltung der zylinderartig bzw. ringartig verlaufenden Fläche kann durch axiales Einpressen der Endwindung der inneren Feder zumindest ein geringer axialer Formschluss erzeugt werden. Die konkave Tiefe kann dabei sehr klein gehalten werden, zum Beispiel in der Größenordnung von 0,05 bis 0,1 mm. Um eine zumindest teilweise formschlüssige Verbindung zwischen den Endwindungen der beiden Federn eines Energiespeichers zu gewährleisten, können die zusammenwirkenden Bereiche bzw. Flächen dieser Endwindungen auch andersartig ausgebildet werden, wobei jedoch stets zumindest eine partielle radiale Überschneidung gegeben sein sollte.

Durch die vorerwähnten Ausgestaltungsmöglichkeiten der Endwindungen der beiden Federn in Bezug aufeinander kann zusätzlich zu einer reibschlüssigen Verbindung zwischen diesen Endwindungen noch eine kleine formschlüssige Verbindung gebildet werden.

Die Endwindungen der beiden einen Energiespeicher bildenden Schraubenfedern können in Bezug aufeinander derart ausgebildet sein, dass beim Zusammenbau der beiden Schraubenfedern zumindest die Endwindung der inneren Feder um einen Betrag elastisch verformt wird, der in der Größenordnung von zumindest 0,1 mm liegen kann. Zweckmäßig kann es sein, wenn diese Endwindung um einen Durchmesserbetrag elastisch verformt wird, der in der Größenordnung zwischen 0,1 und 0,5mm liegt. Durch die Vorspannung der Endwindung der inneren Feder kann auch die Endwindung der äußeren Feder zumindest eine geringe elastische Aufweitung erfahren.

In besonders vorteilhafter Weise kann die am inneren Durchmesserbereich der Endwindung der äußeren Feder angeformte Fläche und die sich an dieser radial abstützende Endwindung der inneren Feder derart aufeinander abgestimmt sein, dass in dem entsprechenden Endbereich des Energiespeichers die beiden Endwindungen zumindest annähernd bündig sind. Die Endwindung der inneren Feder besitzt in vorteilhafter Weise einen größeren Außendurchmesser als diejenigen Windungen der inneren Feder, welche innerhalb der äußeren Feder frei elastisch verformbar sind. Diese Ausgestaltung ermöglicht zumindest eine geringe radiale Überdeckung bzw. Überschneidung zwischen der Endwindung der inneren und der Endwindung der äußeren Feder.

Zweckmäßig kann es sein, wenn die in Bezug auf die Längsachse des Energiespeichers am radial inneren Bereich der Endwindung der äußeren Feder angeformte Fläche derart ausgebildet ist, dass nach Montage der beiden Federn die Endwindung der inneren Feder geringfügig axial versetzt ist gegenüber dem durch die Endwindung der äußeren Feder gebildeten Federende.

Obwohl es zweckmäßig sein kann, wenn die innere Feder und die äußere Feder zumindest annähernd die gleiche längen- bzw. winkelmäßige Erstreckung aufweisen, ist es für viele Anwendungsfälle vorteilhaft, wenn die innere Feder kürzer ist als die äußere, da dadurch ein Drehschwingungsdämpfer mit wenigstens einer zweistufigen Federkennlinie in einfacher Weise realisierbar ist.

Um bei Fliehkrafteinwirkung auf den Energiespeicher eine optimale Abstützung zwischen den Windungen der inneren und äußeren Feder zu gewährleisten, können diese Federn in vorteilhafter Weise einen in Achs- bzw. Längsrichtung des Energiespeichers betrachteten, entgegengerichteten Windungssinn aufweisen. Für manche Anwendungsfälle kann es jedoch auch von Vorteil sein, wenn beide Federn den gleichen Windungssinn besitzen, wobei es zumindest dann zweckmäßig ist, wenn die Windungssteigung der inneren Feder von der Windungssteigung der äußeren Feder abweicht, vorzugsweise kleiner ist. Für manche Anwendungsfälle kann die Windungssteigung der inneren Feder auch größer sein als die der äußeren Feder. Bei Energiespeichern mit unterschiedlichem Windungssinn zwischen Außen- und Innenfeder können die Windungssteigungen ebenfalls entsprechend aufeinander abgestimmt werden.

Um eine einwandfreie Beaufschlagung der Energiespeicher zu gewährleisten, kann es besonders vorteilhaft sein, wenn beide Federn an wenigstens einem Endbereich und im nicht verspannten Zustand mindestens zwei im Wesentlichen aneinanderliegende Windungen aufweisen. Dies bedeutet also, dass die letzte Windung zumindest stellenweise an der vorletzten Windung anliegt. Die letzte Windung der Energiespeicher ist vorzugsweise derart ausgebildet, dass diese in Bezug auf den verwendeten Drahtdurchmesser den geringstmöglichen Steigungswinkel besitzt. Wie an sich bekannt, sind die Endwindungen vorzugsweise mechanisch behandelt, zum Beispiel angeschliffen, so dass sie zumindest stellenweise eine Fläche bilden, welche eine fiktive Ebene tangiert, die zumindest im wesentlichen senkrecht zur Längsachse des Energiespeichers verläuft.

Die Innenfeder kann durch einfaches axiales Hineindrücken bzw. -drängen ihrer Endwindung in die Endwindung der Außenfeder mit letzterer verbunden werden. Beim Hineindrängen der inneren Feder in die äußere Feder werden dabei die eine Verbindung herstellenden Endwindungen elastisch verformt, und zwar kann die entsprechende Endwindung der Außenfeder aufgeweitet und/oder die entsprechende Endwindung der Innenfeder zusammengedrückt werden. Die Federn sind vorzugsweise aus Stahldraht hergestellt.

Die erfindungsgemäße Festlegung der Innenfeder gegenüber der Außenfeder kann in besonders vorteilhafter Weise bei Energiespeichern Verwendung finden, die im entspannten Zustand bereits eine vorgekrümmte Form aufweisen. Dabei ist es vorteilhaft, wenn zumindest die äußere Feder diese vorgekrümmte Form aufweist. Zweckmäßig kann es jedoch auch sein, wenn auch die Innenfeder eine solche vorgekrümmte Form besitzt. Bezogen auf die Längsachse des Energiespeichers können dabei beide Schraubenfedern zumindest annähernd den gleichen Krümmungsradius besitzen. Es kann jedoch auch zweckmäßig sein, wenn Innen- und Außenfeder einen unterschiedlichen Krümmungsradius aufweisen. Die vorgekrümmte Form eignet sich in besonders vorteilhafter Weise für Energiespeicher mit einem großen Längen-Außendurchmesser-Verhältnis, z. B. in der Größenordnung von 5 bis 20.

In besonders vorteilhafter Weise eignen sich die erfindungsgemäßen Energiespeicher für den Einsatz bei einem Drehschwingungsdämpfer, der Bestandteil eines aus mehreren Massen bestehenden Schwungrades ist, oder ein solches bildet. Derartige Energiespeicher können jedoch auch bei Dämpfern für Drehmomentwandler oder Kupplungsscheiben Verwendung finden. In vorteilhafter Weise werden die Drehschwingungsdämpfer zwischen Motor und Getriebe eines Kraftfahrzeuges eingesetzt. Derartige Drehschwingungsdämpfer bzw. Energiespeicher können jedoch auch bei Riemenscheiben mit Torsionsdämpfern Verwendung finden.

Zusätzliche Merkmale und Vorteile der Erfindung ergeben sich aus der folgenden Figurenbeschreibung.

Es zeigen:
- Figur 1: einen Schnitt durch eine Dämpfungseinrichtung,
- Figur 2: einen teilweise dargestellten Schnitt gemäß der Linie II/II der Figur 1,
- Figur 3: eine Vergrößerung eines gemäß der Erfindung ausgebildeten Endabschnittes eines in Figur 2 gezeigten Energiespeichers.

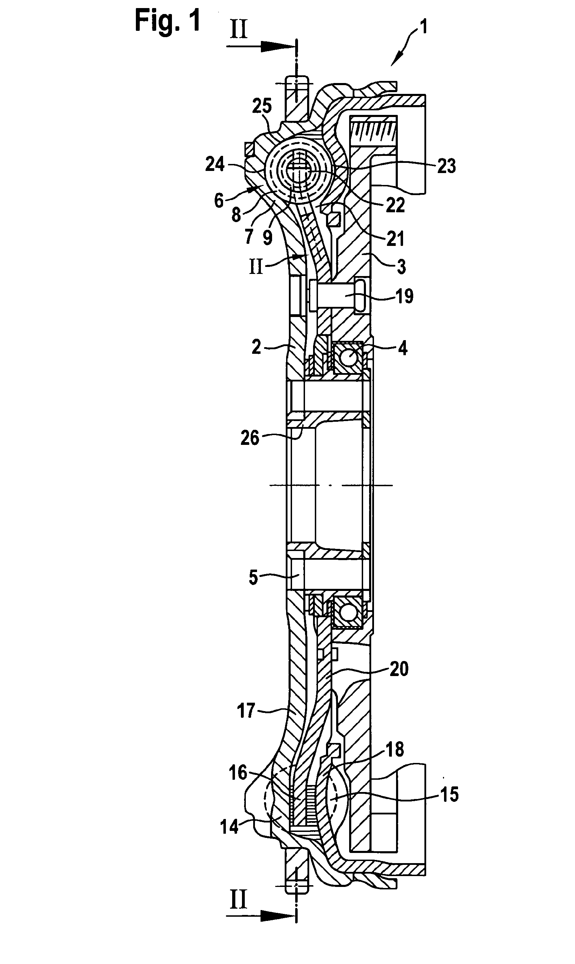

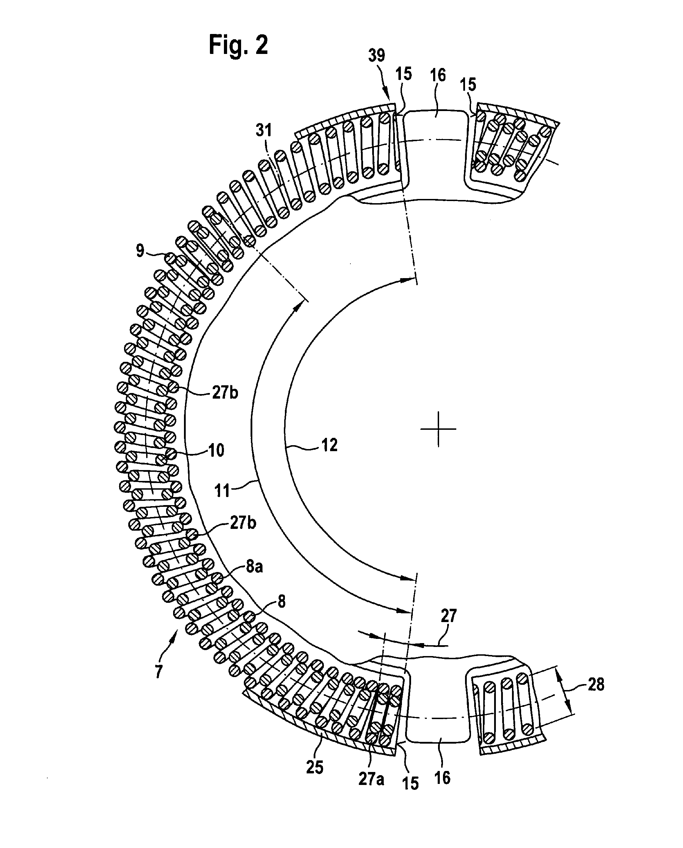

Der in den Figuren 1 und 2 teilweise dargestellte Drehschwingungsdämpfer bildet ein geteiltes Schwungrad 1, das eine an einer nicht gezeigten Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung unter Zwischenlegung einer Kupplungsscheibe befestigbar, über die eine ebenfalls nicht dargestellte Eingangswelle eines Getriebes zu- und abkuppelbar ist. Die Schwungmassen 2 und 3 sind über eine Lagerung 4, die als Wälz- oder Gleitlagerung ausgebildet sein kann, zueinander verdrehbar gelagert. Bei dem dargestellten Ausführungsbeispiel ist die Lagerung 4 radial außerhalb von Bohrungen 5 zur Durchführung von Befestigungsschrauben für die Montage der ersten Schwungmasse 2 an der Abtriebswelle einer Brennkraftmaschine angeordnet. Zwischen den beiden Schwungmassen 2 und 3 ist eine Dämpfungseinrichtung 6 wirksam, die Energiespeicher 7 umfasst, von denen zumindest einer durch Schraubendruckfedern 8,9 gebildet ist. Wie insbesondere aus Figur 2 ersichtlich ist, ist die Schraubendruckfeder 9 vollständig in dem durch die Windungen 8a der Feder 8 gebildeten Raum aufgenommen oder mit anderen Worten die beiden Schraubenfedern 8 und 9 sind über ihre Längserstreckung betrachtet ineinander geschachtelt. Bei dem dargestellten Ausführungsbeispiel ist die in Umfangsrichtung betrachtete winkelmäßige Erstreckung bzw. Länge 11 des in der Schraubenfeder 8 aufgenommenen Abschnittes 10 der Schraubenfeder 9 geringer als die Erstreckung 12 der äußeren Schraubenfeder 8. Zweckmäßig kann es dabei sein, wenn die Feder 9 um einen Betrag gegenüber der äußeren Feder 8 kürzer ist, der in der Größenordnung zwischen 30 und 90 Winkelgrad, vorzugsweise im Bereich von 45 bis 70 Winkelgrad liegt. Die Differenzlänge bzw. der Differenzwinkel kann jedoch auch größer oder kleiner sein.

Die beiden Schwungmassen 2 und 3 besitzen Beaufschlagungsbereiche 14,15 bzw. 16 für die Energiespeicher 7. Bei dem dargestellten Ausführungsbeispiel sind die Beaufschlagungsbereiche 14,15 durch in die die erste Schwungmasse 2 bildenden Blechteile 17,18 eingebrachte Anprägungen gebildet. Die axial zwischen den Beaufschlagungsbereichen 14,15 vorgesehenen Beaufschlagungsbereiche 16 sind durch zumindest ein mit der Sekundärschwungmasse 3, beispielsweise über Niete 19, verbundenes flanschartiges Beaufschlagungsbauteil 20 gebildet. Dieses Bauteil 20 dient als Drehmomentübertragungselement zwischen den Energiespeichern 7 und der Schwungmasse 3. Die Beaufschlagungsbereiche 16 sind durch am Außenumfang des flanschartigen Beaufschlagungsmittels 20 vorgesehene radiale Arme bzw. Ausleger 16 gebildet. Das durch Kaltumformung von Blechmaterial hergestellte Bauteil 17 dient zur Befestigung der ersten Schwungmasse 2 bzw. des gesamten geteilten Schwungrades 1 an der Abtriebswelle einer Brennkraftmaschine. Radial außen ist das Bauteil 17 mit dem ebenfalls aus Blech hergestellten Bauteil 18 verbunden. Die beiden Bauteile 17 und 18 bilden einen ringförmigen Raum 21, der hier einen torusartigen Bereich 22 aufweist. Der ringförmige Raum 21 bzw. der torusartige Bereich 22 kann zumindest teilweise mit einem viskosen Medium, wie beispielsweise Fett, gefüllt sein. In Umfangsrichtung betrachtet, zwischen den Anformungen bzw. den Beaufschlagungsbereichen 14,15 bilden die Bauteile 17,18 Ausbuchtungen 23,24, die den torusartigen Bereich 22 begrenzen und die Energiespeicher 7 aufnehmen sowie sowohl in radialer als auch in axialer Richtung führen. Zumindest beim Rotieren der Einrichtung 1 stützen sich zumindest die Windungen der Federn 8 an den den torusartigen Bereich 22 radial außen begrenzenden Bereichen des Bauteiles 17 und/oder 18 ab. Bei dem dargestellten Ausführungsbeispiel ist ein durch wenigstens eine gehärtete Blechzwischenlage bzw. Blecheinlage gebildeter Verschleißschutz 25 vorgesehen, an dem sich zumindest die Federn 8 radial abstützen. Der Verschleißschutz 25 erstreckt sich in Umfangsrichtung in vorteilhafter Weise zumindest über die gesamte Länge bzw. Winkelerstreckung der entspannten Energiespeicher 7. Infolge der fliehkraftmäßigen Abstützung der Windungen zumindest der Federn 8 wird zwischen diesen Windungen und den mit diesen in Reibeingriff stehenden Bauteilen eine drehzahlabhängige Reibungsdämpfung bei einer Längenänderung bzw. Kompression der Energiespeicher 7 bzw. der Schraubenfedern 8 erzeugt.

Radial innen trägt das sich radial erstreckende Bauteil I7 ein Zwischenteil bzw. eine Nabe 26, das bzw. die den inneren Lagerring des Kugellagers 4 aufnimmt bzw. trägt. Der äußere Lagerring des Kugellagers 4 trägt die Schwungmasse 3.

Wie insbesondere aus Figur 2 ersichtlich ist, sind bei dem gezeigten Ausführungsbeispiel die Beaufschlagungsbereiche 16 winkelmäßig kleiner ausgebildet als die die Energiespeicher 7 in Umfangsrichtung positionierenden Beaufschlagungsbereiche 14,15, so dass, ausgehend von der in Figur 2 dargestellten theoretischen Ruhestellung bzw. Ausgangsstellung, eine geringe Verdrehung in beide Drehrichtungen der Schwungmassen 2 und 3 zueinander ohne Federwirkung möglich ist.

Die hier dargestellte Schraubendruckfeder 8 besitzt einen Endabschnitt 27, der wenigstens zwei voll umlaufende Windungen 27a besitzt.

Die Windungen 27a können zumindest annähernd wenigstens im radial inneren Bereich aneinander anliegen. Im radial äußeren Bereich können die Windungen 27a einen geringen Abstand aufweisen, der bedingt ist durch die Krümmung der Feder 8. Zumindest bei geraden Federn können die Windungen 27a jedoch auch über ihre gesamte ringförmige Erstreckung aneinander anliegen oder aber einen geringen Abstand (bis zu einem Millimeter) aufweisen. Die im Endabschnitt 27 vorgesehenen Windungen 27a besitzen also praktisch die durch den Durchmesser des die Schraubenfeder 8 bildenden Federdrahtes vorgegebene geringstmögliche Steigung. Vorteilhaft kann es sein, wenn der Endabschnitt 27 derart bemessen ist, dass in diesem zwei bis fünf Windungen 27a enthalten sind. Die Anzahl derartiger Windungen 27a kann jedoch auch größer sein, wobei dann jedoch die Federkapazität des Energiespeichers 7 entsprechend reduziert wird, da die Windungen 27a bereits im entspannten Zustand des Energiespeichers 7 zumindest annähernd auf Block sind, also sich zumindest annähernd berühren.

Die zwischen den Endbereichen der Feder 8 vorhandenen Windungen 27b sind durch entsprechende Wahl der Windungssteigung voneinander beabstandet und kommen erst bei Blockbeanspruchung der Feder 8 zumindest im radial inneren Bereich aneinander zur Anlage. Bei dem dargestellten Ausführungsbeispiel haben die Windungen 27a und 27b den gleichen mittleren Windungsdurchmesser 28. Diese Windungen könnten jedoch auch zumindest geringfügig voneinander differierende mittlere Windungsdurchmesser aufweisen. So können beispielsweise die Windungen 27a einen kleineren oder größeren mittleren Windungsdurchmesser aufweisen als die Windungen 27b. Weiterhin kann die Feder 8 derart ausgebildet werden, dass Windungen 27b mit unterschiedlicher Steigung vorhanden sind. Dabei können in Längsrichtung der Feder 8 betrachtet Windungen 27b mit unterschiedlicher Steigung periodisch aufeinanderfolgend angeordnet sein, wobei jede Periode eine oder mehrere derartige Windungen aufweisen kann. Bei Einsatz von Federn, insbesondere gekrümmte bzw. Bogenfedern mit elastisch verformbaren Windungen unterschiedlicher Steigung kann es besonders vorteilhaft sein, wenn ausgehend von den Endbereichen einer Feder die federnden Windungen zur Mitte der Feder hin bzw. zu einem Zwischenbereich der Feder hin eine sich vergrößernde bzw. zunehmende Steigung aufweisen.

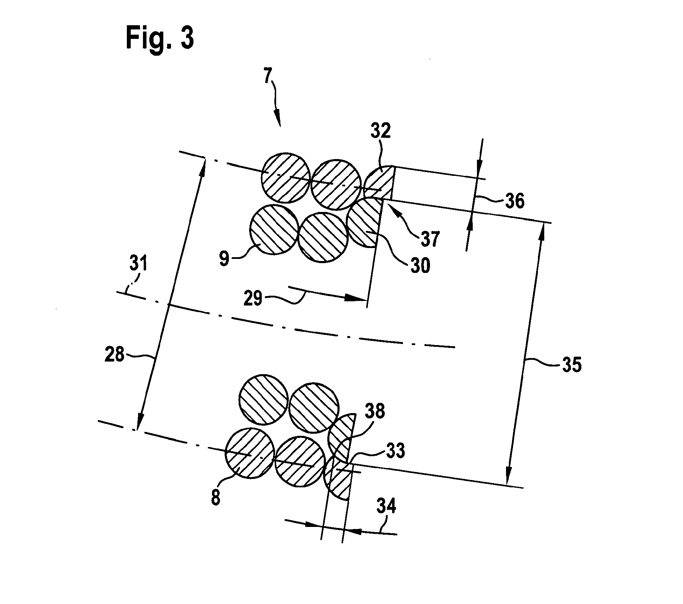

Wie aus Figur 3, welche eine erfindungsgemäße Ausgestaltung eines Endbereiches eines Energiespeichers 7 zeigt, ersichtlich ist, besitzt die Innenfeder 9 einen Endbereich 29, der eine um die Längsachse 31 des Energiespeichers 7 verlaufende Endwindung 30 aufweist. Diese Endwindung 30 dient, wie dies im folgenden noch näher beschrieben wird, zur axialen Sicherung der Innenfeder 9 gegenüber der Außenfeder 8. Hierfür ist die Endwindung 30 in Bezug auf die diese umgebenden Windungsbereiche 32 derart ausgebildet bzw. dimensioniert, dass im zusammengebauten Zustand der beiden Federn 8 und 9 zumindest eine radiale Verspannung zwischen den Windungsbereichen 32 und der darin aufgenommenen Endwindung 30 vorhanden ist.

Die Windungsbereiche 32 sind radial innen derart ausgebildet, dass sie eine um die Längsachse 31 zylindrisch verlaufende Fläche 33 bilden, welche die Endwindung 30 der Innenfeder 9 umgreift. Die axiale Erstreckung 34 der Fläche 33 ist bei dem dargestellten Ausführungsbeispiel derart bemessen, dass in Richtung der Längsachse 31 betrachtet, die Endwindung 30 geringfügig innerhalb der äußeren Feder 8 versetzt ist. Dadurch kann eine einwandfreie Montage und axiale Sicherung der Endwindung 30 innerhalb der Windungsbereiche 32 gewährleisten werden. Der Durchmesser 35 der zylindrisch verlaufenden Fläche 33 ist auf das notwendige Minimum reduziert, so dass die Windungsbereiche 32 der Endwindung der äußeren Feder 8 zumindest in radialer Richtung noch eine verhältnismäßig große Materialstärke 36 besitzen.

Im nicht montierten Zustand besitzt die Endwindung 30 einen Außendurchmesser, der größer ist als der Durchmesser 35 der Fläche 33. Die Überschneidung zwischen dem Durchmesser 35 der Fläche 33 und dem Außendurchmesser der nicht verspannten Endwindung 30 ist derart bemessen, dass die bei Montage der beiden Federn 8 und 9 erfolgende radiale Verspannung zwischen den Windungsbereichen 32 und der Endwindung 30 eine axiale Sicherung zwischen den beiden Federn 8 und 9 gewährleistet. Zweckmäßig ist es, wenn die nicht verspannte Endwindung 30 einen Außendurchmesser besitzt, der zumindest 0,1 mm größer ist, als der Durchmesser 35 der Fläche 33. In vorteilhafter Weise kann der nicht vorgespannte Außendurchmesser der Endwindung 32 0,2 bis 0,5mm größer sein als der Durchmesser 35 der Fläche 33. Der durch die vorgeschriebene Verspannung erzeugte Reibschluss zwischen der Fläche 33 und der Endwindung 30 verhindert ein Verrutschen zwischen den Federn 8 und 9.

Die zumindest die zylindrisch verlaufende Fläche 33 bildende Anformung 37 an den Windungsbereichen 32 kann in vorteilhafter Weise durch eine Schleifoperation hergestellt werden.

Wie aus Figur 3 ersichtlich ist, ist die Anformung 37 derart ausgebildet, dass sie im Anschluss an die Erstreckung 34 der Fläche 33 noch eine Durchmesserverjüngung 38 bildet. Durch diese Durchmesserverjüngung der Windungsbereiche 32 ergibt sich, in Richtung der Längsachse 31 des Energiespeichers 7 betrachtet, eine zusätzliche radiale Überschneidung zwischen dieser Verjüngung 38 und der Endwindung 30, wodurch eine zusätzliche axiale Sicherung der inneren Feder 9 gegenüber der äußeren Feder 8 gewährleistet wird. In vorteilhafter Weise kann die Durchmesserverjüngung 38 derart ausgebildet sein, dass sie eine Fläche bildet, welche an die Außenkontur der anliegenden Bereiche der Endwindung 30 angepasst ist.

Die erfindungsgemäße Ausgestaltung einer Verliersicherung zwischen einer Außenfeder 8 und einer Innenfeder 9 ermöglicht, trotz der an sich vorhandenen Schwächung der Windungsbereiche 32, diese ausreichend robust auszugestalten, um Brüche zu verhindern.

Gemäß einer nicht dargestellten Ausführungsvariante kann die Endwindung 30 am äußeren Durchmesserbereich eine Anformung bzw. Abflachung aufweisen, die zumindest annähernd eine zylindrisch verlaufende Fläche bildet. Durch eine derartige Anformung kann ein flächiger Reibschluss zwischen den Windungsbereichen 32 und der Endwindung 30 erzeugt werden.

Weiterhin kann es vorteilhaft sein, wenn die Fläche 33 derart ausgebildet wird, dass sie in beide axiale Richtungen des Energiespeichers 7 betrachtet, für die Endwindung 30 eine Hinterschneidung bzw. formschlüssige Abstützung bildet. Hierfür kann die Fläche 33, im Querschnitt betrachtet, beispielsweise geringfügig konkav ausgebildet sein, so dass die in der konkavartig ausgebildeten Fläche 33 vorzugsweise mit radialer Vorspannung aufgenommene Endwindung 30 eine einwandfreie Sicherung zwischen den beiden Federn 8 und 9 gewährleistet. Es kann also durch entsprechende Ausgestaltung der Fläche 33 auch eine Art "Schnappverbindung" zwischen den beiden Federn 8 und 9 gebildet werden.

Zweckmäßig kann es sein, wenn die beiden Schraubenfedern 8,9 zumindest annähernd den gleichen Drahtdurchmesser aufweisen. Für viele Anwendungsfälle ist es jedoch vorteilhaft, wenn der Drahtquerschnitt der Schraubenfeder 9 einen kleineren Durchmesser besitzt als derjenige der Schraubenfeder 8.

Beim Komprimieren eines Energiespeichers 7 werden dessen in Umfangsrichtung betrachteten Stirnflächen bzw. die an diese angrenzenden Endwindungen der Feder 8 und 9 durch die Beaufschlagungsbereiche 14,15 oder 16 beaufschlagt.

Der Drahtquerschnitt der Federn 8,9 sowie deren jeweilige Windungssteigung, als auch die Erstreckung 11 der Feder 9 und die Erstreckung 12 der Feder 8 sind vorzugsweise derart aufeinander abgestimmt, dass beim Durchfahren des vollen möglichen Verdrehwinkels zwischen den beiden Schwungmassen 2, 3 die Windungen 8a der Feder 8 auf Block gehen, und zwar bei einer Ausführungsform der Federn 8, 9 gemäß den Figuren 2 und 2a im radial inneren Bereich der Windungen 8a. Für manche Anwendungsfälle kann der Energiespeicher 7 jedoch auch derart ausgebildet sein, dass die Windungen der Federn 9 auf Block gehen oder aber sowohl Windungen der Feder 8 als auch Windungen der Feder 9 auf Block gehen.

Für die Montage und die Funktion des Drehschwingungsdämpfers ist es besonders vorteilhaft, wenn wenigstens eine der Schraubenfedern 8, 9 im entspannten Zustand eine vorgekrümmte Form aufweist. Für die weitaus meisten Fälle wird es zweckmäßig sein, wenn beide Schraubenfedern 8, 9 im entspannten Zustand eine vorgekrümmte Form besitzen, wobei bezogen auf die Längsachse 31 des Energiespeichers 7 beide Schraubenfedern 8, 9 zumindest annähernd den gleichen Krümmungsradius besitzen können. Es kann jedoch auch zweckmäßig sein, wenn zur Spannungsoptimierung im Federdraht der entsprechenden Feder der Krümmungsradius wenigstens einer der Federn 8, 9 größer oder kleiner ist als der mittlere Radius 31 (= Längsachse 31), auf dem ein solcher Energiespeicher 7 verbaut wird. Wie insbesondere aus Figur 2 zu entnehmen ist, besitzt der Energiespeicher 7 bzw. zumindest die Schraubendruckfeder 8 ein großes Längen-Außendurchmesser-Verhältnis, wodurch große Verdrehwinkel zwischen den beiden Schwungmassen bzw. Schwungradelementen 2, 3 ermöglicht sind.

Um die Lebensdauer der Federn 8,9 zu erhöhen bzw. einen Bruch der Endwindungen der Feder 8 und/oder 9 zu verhindern, ist es zweckmäßig, wenn diese Endwindungen gemäß der DE 42 29 416 A1 ausgebildet werden.

Um die Bockfestigkeit bzw. Dauerfestigkeit der Federn 8 und/oder 9 zu erhöhen, ist es zweckmäßig, wenn diese einen Drahtquerschnitt entsprechend der DE 44 06 826 A1 aufweisen und/oder entsprechend einem in diesen DE-Veröffentlichungen beschriebenen Verfahren zur Erzeugung eines derartigen Querschnittes hergestellt sind.

Bei einer Ausgestaltung der Energiespeicher 7 gemäß Figur 2 können über den Umfang des ringförmigen Raumes 21 zwei derartige Energiespeicher angeordnet werden, wobei, wie aus Figur 2 ersichtlich ist, der Einbau derart vorgenommen wird, dass praktisch keine Unwucht im System entstehen kann. Die Endabschnitte der Federn 8 bzw. 9 sind also diametral gegenüberliegend angeordnet.

Aufgrund des erfindungsgemäßen Aufbaus sind die in den Schraubenfedern 8 aufgenommenen Bereiche 10 der Schraubenfedern 9 in Umfangsrichtung gegenüber der Feder 8 eindeutig positioniert, so dass die Abschnitte 10 innerhalb der Schraubenfeder 9 sich nicht verschieben bzw. nicht vagabundieren können. Dadurch wird die Ausbildung einer Unwucht während des Betriebes des Drehschwingungsdämpfers vermieden.

Gemäß einer nicht dargestellten Ausführungsform könnte zumindest eine Feder 8 auch zwei Schraubenfedern, die gemäß einer Feder 9 ausgebildet sind, aufnehmen, und zwar könnte eine Feder 8 gemäß Figur 2 auch an ihrem zweiten Endbereich 39 eine bezüglich der Länge entsprechend abgestimmte Feder 9 aufnehmen. Die Länge 11 des jeweiligen Bereiches 10 müsste gegebenenfalls entsprechend gekürzt bzw. angepasst werden, wobei es zweckmäßig sein kann, wenn zwischen den einander zugewandten Endbereichen der entsprechenden Abschnitte 10 der beiden Innenfedern ein Spiel bzw. Abstand vorhanden bleibt oder eine weitere Feder vorgesehen wird.

Die einzelnen Innenfedern können die gleiche Federrate aufweisen. Vorteilhaft kann es jedoch auch sein, wenn die Innenfedern eine verschiedene Federrate aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1.: Schwungrad
- 2.: Primärschwungmasse
- 3.: Sekundärschwungmasse
- 4.: Lagerung
- 5.: Bohrungen
- 6.: Dämpfungseinrichtung
- 7.: Energiespeicher
- 8.: Schraubendruckfedern
- 8a.: Windungen
- 9.: Schraubendruckfedern
- 10.: Abschnitt
- 11.: winkelmäßige Erstreckung bzw. Länge
- 12.: Erstreckung
- 13.: ---
- 14.: Beaufschlagungsbereich
- 15.: Beaufschlagungsbereich
- 16.: Beaufschlagungsbereich
- 17.: Blechteil
- 18.: Blechteil
- 19.: Niete
- 20.: flanschartiges Beaufschlagungsbauteil
- 21.: ringförmiger Raum
- 22.: torusartiger Bereich
- 23.: Ausbuchtungen
- 24.: Ausbuchtungen
- 25.: Verschleißschutz
- 26.: Nabe.
- 27: Endabschnitt
- 27a: Windungen
- 27b: Windungen
- 28: mittlere Windungsdurchmesser
- 29: Endbereich
- 30: Endwindung
- 31: Längsachse

- 32: Windungsbereiche
- 33: Zylindrisch verlaufende Fläche
- 34: Axiale Erstreckung
- 35: Durchmesser
- 36: Materialstärke
- 37: Anformung
- 38: Durchmesserverjüngung
- 39: Endbereich

## Patentansprüche

1. Drehschwingungsdämpfer mit wenigstens zwei, entgegen dem Widerstand von zumindest einem Energiespeicher mit entlang seiner Längsachse sich erstreckenden Federwindungen verdrehbaren Bauelementen, welche Beaufschlagungsbereiche zur Komprimierung des Energiespeichers besitzen, wobei der Energiespeicher aus wenigstens zwei Schraubenfedern besteht, von denen die eine, erste, Schraubenfeder zumindest teilweise innerhalb des durch die Windungen der anderen, zweiten, Schraubenfeder gebildeten Federinnenraumes aufgenommen ist und der Durchmesser einer Windung der ersten Feder derart bemessen ist, dass sich diese Windung innerhalb der Erstreckung des Federinnenraumes mit zumindest einer Windung der zweiten Feder - im Wesentlichen senkrecht zur Längsachse des Energiespeichers betrachtet - radial überlagert, **dadurch gekennzeichnet, dass** die zweite Schraubenfeder zumindest an einer ihrer Endwindungen eine um die Längsachse zylindrisch verlaufende Fläche angeformt hat und die erste Feder im nicht montierten Zustand eine Endwindung mit einem größeren Außendurchmesser als die zylindrisch verlaufende Fläche besitzt, welche mit radialer Vorspannung in der zylindrisch verlaufenden Fläche aufgenommen ist.

2. Drehschwingungsdämpfer nach Anspruch 1, **dadurch gekennzeichnet, dass** die beiden Federn in Bezug aufeinander derart ausgerichtet sind, dass die Endwindungen beider Federn zumindest an einem Ende des Energiespeichers wenigstens annähernd bündig sind.

3. Drehschwingungsdämpfer nach Anspruch 1 oder 2, **dadurch gekennzeichnet, dass** die erste Schraubenfeder kürzer ist als die zweite Schraubenfeder.

4. Drehschwingungsdämpfer nach wenigstens einem der vorhergehenden Ansprüche, **dadurch gekennzeichnet, dass** beide Federn einen entgegengerichteten Windungssinn aufweisen.

5. Drehschwingungsdämpfer nach wenigstens einem der vorhergehenden Ansprüche, **dadurch gekennzeichnet, dass** beide Federn den gleichen Windungssinn aufweisen.

6. Drehschwingungsdämpfer nach wenigstens einem der vorhergehenden Ansprüche, **dadurch gekennzeichnet, dass** die jeweilige Endwindung der beiden Schraubenfedern derart bemessen ist, dass die erste Feder in die zweite Feder hineindrängbar ist und hierbei sich zumindest eine der Windungen elastisch aufweitet und/oder verkleinert.

7. Drehschwingungsdämpfer nach wenigstens einem der vorhergehenden Ansprüche, **dadurch gekennzeichnet, dass** bei gleichem Wickelsinn der beiden Federn zumindest die federnden Windungen der inneren Feder eine kleinere Steigung besitzen als die federnden Windungen der äußeren Feder.

8. Drehschwingungsdämpfer nach wenigstens einem der vorhergehenden Ansprüche, **dadurch gekennzeichnet, dass** wenigstens eine der Schraubenfedern im entspannten Zustand eine vorgekrümmte Form aufweist.

9. Drehschwingungsdämpfer nach wenigstens einem der vorhergehenden Ansprüche, **dadurch gekennzeichnet, dass** bezogen auf die Längsachse des Energiespeichers - beide Schraubenfedern zumindest annähernd den gleichen Krümmungsradius besitzen.

10. Drehschwingungsdämpfer nach wenigstens einem der vorhergehenden Ansprüche, **dadurch gekennzeichnet, dass** der Energiespeicher ein großes Längen-Außendurchmesser-Verhältnis aufweist.

11. Drehschwingungsdämpfer nach wenigstens einem der vorhergehenden Ansprüche, **dadurch gekennzeichnet, dass** dieser Bestandteil eines aus mehreren Massen bestehenden Schwungrades ist oder ein solches bildet.

12. Drehschwingungsdämpfer nach einem der vorhergehenden Ansprüche, **dadurch gekennzeichnet, dass** zumindest die Endwindungen der ersten und der zweiten Schraubenfeder eine in Bezug auf den die Windungen bildenden Drahtdurchmesser geringstmögliche Steigung aufweisen und derart angeschliffen sind, dass sie eine zumindest annähernd senkrecht zur Längsachse des Energiespeichers verlaufende Ebene tangieren.

13. Drehschwingungsdämpfer nach einem der Ansprüche 1 bis 12, **dadurch gekennzeichnet, dass** die Endwindung der ersten Schraubenfeder - in axialer Richtung des Energiespeichers betrachtet - vollständig innerhalb des durch die zylindrisch verlaufende Fläche begrenzten Bauraums aufgenommen ist.
